Europäisches Patentamt

European Patent Office

Office européen des brevets

(19)

(11) Veröffentlichungsnummer: **0 038 444**
**B1**

(12) **EUROPÄISCHE PATENTSCHRIFT**

(45) Veröffentlichungstag der Patentschrift:
19.10.83

(51) Int. Cl.³: **B 01 D 53/34**

(21) Anmeldenummer: 81102438.9

(22) Anmeldetag: 31.03.81

(54) Verfahren zur Beseitigung geruchsaktiver Substanzen aus der Abluft.

(30) Priorität: 19.04.80 DE 3015220

(43) Veröffentlichungstag der Anmeldung:
28.10.81 Patentblatt 81/43

(45) Bekanntmachung des Hinweises auf die Patenterteilung:
19.10.83 Patentblatt 83/42

(84) Benannte Vertragsstaaten:
AT CH GB LI NL

(56) Entgegenhaltungen:
DE-A-1 544 043
DE-A-1 956 197
DE-A-2 453 434
DE-A-2 813 403
WASSER LUFT UND BETRIEB, Band 18, Nr. 11, 1974, W. KNOP »Verminderung der durch Tierkörperverwertungsanstalten verursachten Geruchsbelästigung«, Seiten 598 bis 604

(73) Patentinhaber: **Anton Steinecker Maschinenfabrik GmbH, Münchenerstrasse 18, D-8050 Freising (DE)**

(72) Erfinder: **Drawert, Friedrich, Prof. Dr., Biernerstrasse 22, D-8050 Freising (DE)**
Erfinder: **Schreier, Peter, Dr., Simon-Breu-Strasse 27, D-8700 Würzburg (DE)**
Erfinder: **Krämer, Gabriele, Dr. rer. nat., Zugspitzstrasse 100, D-8500 Nürnberg (DE)**

(74) Vertreter: **Tetzner, Volkmar, Dr.-Ing. Dr. Jur., Van-Gogh-Strasse 3, D-8000 München 71 (DE)**

**0 038 444**

Verfahren zur Beseitigung geruchsaktiver Substanzen aus der Abluft

Im Zuge der Bestrebungen, schädliche Umwelteinwirkungen durch Luftverunreinigungen zu vermeiden, schenkt man neuerdings der Verminderung von Geruchsemissionen industrieller Abgase besondere Beachtung. Störende und teilweise sogar äußerst unangenehme Geruchseindrücke werden auch von vielen Betrieben der industriellen Lebensmittelverarbeitung erzeugt, beispielsweise von Brauerei-Sudanlagen, Mälzerei-Anlagen, Kaffee-Röstereien, Fischverarbeitungs-Betrieben, Anlagen der Suppenwürze-Industrie, ferner auch von Betrieben zur Tierkörperbeseitigung und dergleichen.

Die bisher eingeschlagenen Wege zur Beseitigung bzw. weitgehenden Verringerung dieser Geruchsemissionen sind teils unzulänglich, teils sehr aufwendig.

Die im Mälzereiprozeß bei der Verarbeitung von Gerste zu Malz anfallenden Geruchsstoffe sowie die in Brauerei-Sudanlagen bei der Maischebereitung und bei der Würzekochung auftretenden, gleichfalls sehr störenden geruchsaktiven Substanzen hat man bisher zusammen mit dem in den Schwaden oder Brüden enthaltenen Wasserdampf im allgemeinen einfach über Dach in die Atmosphäre entlassen. Eine zum Zwecke der Wärmerückgewinnung vorgenommene Kühlung der Schwaden oder Brüden (in sogenannten Pfannendunstkondensatoren) beseitigt hierbei nur maximal etwa 30 Gew.-% der geruchsaktiven Substanzen (und zwar hauptsächlich die wasserlöslichen Geruchsstoffe), während mindestens 70 Gew.-%, und zwar die besonders aromaintensiven und störenden Substanzen, in der Abluft verbleiben.

Bei anderen Betrieben, bei denen Abluft mit geruchsaktiven Substanzen anfällt, erfolgt eine Reinigung in Form einer Gaswäsche, wobei das Waschwasser Zusätze von Laugen und Alkalien erhalten kann. Hiermit ist jedoch eine Abwasserbelastung verbunden, die eine entsprechende Neutralisierung erfordert. Auch andere zur Reinigung eingesetzte Stoffe, wie Phosphate, belasten das Abwasser beträchtlich. Auch eine Gaswäsche mittels Ozon oder Chlorkalk stellt eine Umweltbelastung dar und ist zusätzlich mit dem Nachteil einer Korrosionsgefahr behaftet.

Zur Beseitigung geruchsaktiver Substanzen sind ferner die verschiedensten Adsorptions- und Absorptionsverfahren unter Einsatz von Filtern, wie biologischen Filtern und Aktivkohle, bekannt. Derartige Verfahren bedingen bei großtechnischen Anlagen einen erheblichen Aufwand, zumal die Filter einen hohen Strömungswiderstand verursachen.

Schließlich ist es auch bekannt, in Abgasen enthaltene, geruchsaktive Substanzen im Wege der katalytischen Nachverbrennung zu beseitigen. Auch dieses Verfahren kann jedoch wegen des damit verbundenen großen Aufwandes nicht befriedigen.

Einzelheiten dieser bekannten Verfahren zur Beseitigung geruchsaktiver Substanzen sind in »Wasser, Luft und Betrieb« 18 (1974), Nr. 11, S. 598 — 604, erörtert.

Es ist ferner ein Verfahren zum Reinigen eines Gases bekannt (DE-A-1 544 043), bei dem mit Hilfe des zu reinigenden Gases und einer Reinigungsflüssigkeit ein Schaum erzeugt wird. Als Reinigungsflüssigkeit soll hierbei u. a. Wasser Verwendung finden, dem äthoxylierte Alkyl-Phenole zugesetzt sind.

Der Erfindung liegt die Aufgabe zugrunde, ein besonders einfaches und umweltfreundliches (insbesondere das Abwasser nicht belastendes) Verfahren zur Beseitigung geruchsaktiver Substanzen aus der Abluft (insbesondere der eingangs genannten Anlagen) zu schaffen. Die Erfindung geht hierbei von einem Verfahren aus, bei dem die Abluft durch Eindüsen von mit einem Zusatz versehenen Waschwasser gereinigt wird.

Erfindungsgemäß werden als Zusatz

a) nichtiogene Verbindungen, nämlich

    $a_1$) partielle Ester von Polyalkoholen, wie Glyzerinmono- bzw. distearate und -oleate, Sorbitmonostearat und -oleat oder

    $a_2$) Äthylenoxid- bzw. Propylenoxid-Addukte mit Fettsäuren, Fettalkoholen, Fettaminen, partiellen Fettsäureestern mehrwertiger Alkohole, insbesondere des Glyzerins und des Sorbits, Wasser (Polyalkylenglykole) oder

b) ampholytische Verbindungen, nämlich

    $b_1$) langkettige substituierte Aminosäuren wie N-Alkyl-di-(aminoäthyl)-glycin, N-Alkyl-2-amino-propionat oder

    $b_2$) Betaine, wie (3-Acylaminopropyl)-dimethylglycin, Alkyl-imidazolium-Betaine oder

c) Mischungen von Verbindungen der Gruppen a) und b) verwendet, wobei

d) zur Beseitigung unpolarer (liphophiler) geruchsaktiver Substanzen als Zusatz Verbindungen der Gruppe a) und zur Beseitigung polarer geruchsaktiver Substanzen als Zusatz Verbindungen der Gruppe b) oder eine Mischung von Verbindungen der Gruppen a) und b) verwendet werden.

Die vorstehend genannten Verbindungen sind grenzflächenaktive Stoffe, die biologisch abbaubar sind und demgemäß zusammen mit dem Waschwasser in eine Kläranlage entlassen werden können. Der Zusatz dieser grenzflächenaktiven Stoffe zum Waschwasser vermittelt die Löslichkeit für die zu entfernenden geruchsaktiven Substanzen.

Die genannten grenzflächenaktiven Stoffe werden erfindungsgemäß dem Waschwasser in einer Menge von 0,1 bis 3 Gewichtsprozent, vorzugsweise von 0,5 bis 1,2 Gewichtsprozent, beigegeben. Wesentlich ist hierbei, daß der Schäumungsgrad gering ist.

Findet ein Gaswäscher Verwendung, der im unteren Bereich einen Anschluß zum Gaseintritt und einen Anschluß zum Waschwasseraustritt und im oberen Bereich einen Anschluß zum Gasaustritt sowie einen Sprühkopf zum Eindüsen des Waschwassers aufweist, wobei der untere Teil des Wäscher-Gehäuses zur Oberflächenvergrößerung dienende Füllkörper enthält, so wird erfindungsgemäß die Menge des Waschwasser-Zusatzes so dosiert, daß der von Füllkörpern freie, gasdurchströmte Kopfraum des Wäscher-Gehäuses nicht vollständig mit Schaum gefüllt ist.

Zur Erzielung einer optimalen Beseitigung der geruchsaktiven Substanzen wird die Abluft bei dem erfindungsgemäßen Verfahren zweckmäßig mit einer Temperatur von weniger als 80°C der Waschstrecke zugeführt.

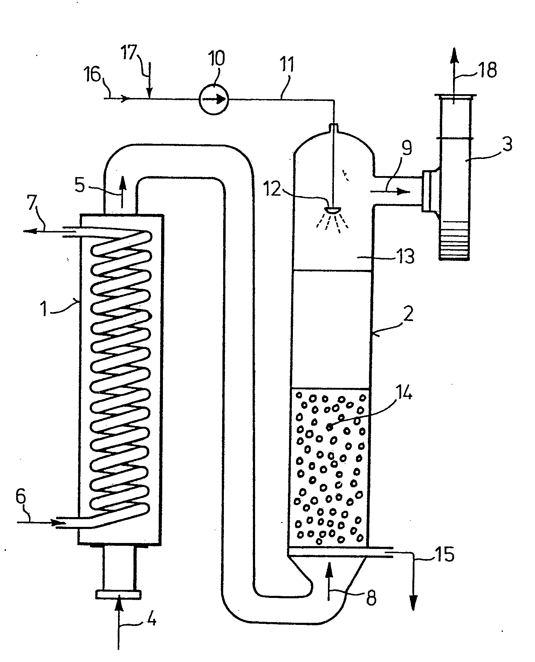

Die Erfindung sei weiterhin unter Bezugnahme auf die Zeichnung, die eine Anlage zur Durchführung des Verfahrens schematisch veranschaulicht, sowie anhand einiger Beispiele näher erläutert.

Die Zeichnung veranschaulicht lediglich die eigentliche Waschstrecke, nicht dagegen die Teile der Anlage (beispielsweise eines Sudhauses oder einer Mälzerie), in denen die mit geruchsaktiven Substanzen beladene Abluft anfällt.

Die Waschstrecke enthält einen Wärmetauscher 1, einen Gaswäscher 2 sowie einen Ventilator 3. Die mit den geruchsaktiven Substanzen beladene Abluft tritt bei 4 in den Wärmetauscher ein und bei 5 aus dem Wärmetauscher aus. Das Kühlmedium wird bei 6 zu- und bei 7 abgeführt.

Der Gaswäscher 2 weist im unteren Bereich einen Anschluß zum Eintritt (Pfeil 8) und im oberen Bereich einen Anschluß zum Austritt (Pfeil 9) der Abluft auf. Das Waschwasser wird über eine mit einer Pumpe 10 versehene Leitung 11 durch einen Sprühkopf 12 in den Kopfraum 13 des Gaswäschers 2 eingedüst. Der untere Teil des Wäscher-Gehäuses enthält zur Oberflächenvergrößerung dienende Füllkörper 14. Der Abzug der Waschflüssigkeit erfolgt bei 15 im untersten Teil des Wäscher-Gehäuses.

Der grenzflächenaktive Zusatz wird dem Waschwasser (Pfeil 16) bei 17 zugesetzt. Die von den geruchsaktiven Substanzen gereinigte Abluft tritt bei 18 aus dem Ventilator 3 aus.

Die Funktion einer solchen Waschstrecke und der durch den erfindungsgemäßen Zusatz erzielte technische Effekt sei an folgenden Beispielen näher erläutert:

Beispiel 1

Sudhaus

Die mit geruchsaktiven Substanzen beladenen Brüden bzw. Schwaden fallen hier in den verschiedensten Maisch- und Würzepfannen an, z. B. in Einmaischbottichen, Maischepfannen, Maischebottichen, Maischbottichpfannen, Würzepfannen mit offener oder geschlossener Kochung ohne Luftzutritt (z. B. mit Innenkocher oder Außenkocher bestückt).

Diese Abluft enthält — wie Versuche zeigten — beispielsweise folgende nichtkondensierbare geruchsaktive Substanzen:

| Konzentrationsbereich, mg/m$^3$ | Verbindung |
|---|---|
| 5,0—45,0 | Myrcen |
| 5,0—45,0 | $\alpha$-Humulen |
| 5,0—45,0 | $\beta$-Caryophyllen |
| 0,2— 5,0 | $\gamma$-Terpinen |
| 0,2— 5,0 | $\alpha$-Selinen |
| 0,2— 5,0 | $\beta$-Selinen |
| 0,2— 5,0 | $\alpha$-Cadinen |
| 0,2— 5,0 | $\delta$-Cadinen |
| 0,2— 5,0 | Isobuttersäure-2-methylbutylester |
| 0,2— 5,0 | Isobuttersäure-n-pentylester |
| 0,2— 5,0 | 6-Methylheptansäuremethylester |
| 0,2— 5,0 | Isobutylmethylketon |

Dem Waschwasser wird ein Zusatz von 1 Gewichtsprozent Polyäthylenglykol-Sorbitan-Laurat (d. h. eine Verbindung der Gruppe a$_1$, vgl. den Hauptanspruch) beigegeben.

Die weiteren Verfahrensbedingungen sind bei zwei Varianten des Sudhauses (offene und geschlossene Kochung) wie folgt:

| | offene Kochung | geschlossene Kochung |
|---|---|---|
| Temperatur der Brüden vor dem Wärmetauscher | ca. 90°C | ca. 100°C |
| Temperatur der Brüden nach dem Wärmetauscher | ca. 60—70°C | ca. 50—60°C |
| Verdampfung in Gew.-% | 8—10% | 10—13% |
| pro 100 hl Ausschlagmenge und Stunde sind an Waschwasser einzusprühen | 24 hl | 30 hl |
| Zusatz (1 Gew.-%) von Polyäthylenglykol-Sorbitan-Laurat | 24 l | 34 l |

Durch den erfindungsgemäßen Zusatz wird der Anteil an organischen, geruchsaktiven Substanzen in der gereinigten Abluft auf 7,4 Gew.-% (bezogen auf den Anteil in den Brüden) gesenkt. Der auf diese Weise erzielte wesentliche technische Fortschritt wird besonders augenfällig, wenn man die Verhältnisse ohne Verwendung des Zusatzes gegenüberstellt. Hier finden sich bei Einsatz des Waschwasser-Sprühkopfes noch 66 Gew.-% der Gesamtemission geruchsaktiver organischer Substanzen im Restgas, und bei zusätzlichem Verzicht auf eine Kühlung der Brüden sogar 85 Gew.-%.


Beispiel 2

Mälzerei (Keimung)

Die aus Mälzerei-Keimkästen abgezogenen Brüden enthalten beispielsweise folgende geruchsaktive Substanzen:

|  | μg/m³ Abluft und Tag |
| --- | --- |
| Carbonyle |  |
| Isopropylmethylketon | 27 |
| Hexanal | 4,5 |
| tr-2-Hexenal | 15 |
| tr-cis-Nonadien-2,6-al | 8,2 |
| tr-tr-Decadien-2,4-al | 2,8 |
| Alkohole |  |
| n-Hexanol | 703 |
| 1-Penten-3-ol | 27 |
| cis-Penten-3-ol | 19 |
| tr-2-Octen-1-ol | 2,8 |
| 2-Nonen-1-ol | 6,0 |

Die anfallenden Brüden besitzen eine Temperatur unter 20°C. Der Wärmetauscher kommt daher hier in Fortfall.

Dem Waschwasser wird ein Zusatz von 0,5 Gew.-% eines Esters des Sorbitans mit Stearinsäure beigegeben.

Das so gereinigte Restgas enthält nur noch 5 Gew.-% des ursprünglichen Gesamtgehaltes geruchsaktiver organischer Substanzen.

Beispiel 3

Mälzerei (Darren)

Die Abluft der Darren enthält beispielsweise folgende geruchsaktive Substanzen:

**0 038 444**

|  | μg/m³ Abluft und Tag |
|---|---|
| Carbonyle | |
| Isopropylmethylketon | 400 |
| Hexanal | 54 |
| tr-2-Hexenal | 182 |
| tr-cis-Nonadien-2,6-al | 96 |
| tr-tr-Decadien-2,4-al | 36 |
| Alkohole | |
| n-Hexanol | 4960 |
| 1-Penten-3-ol | 330 |
| cis-Penten-3-ol | 228 |
| tr-2-Octen-1-ol | 28 |
| 2-Nonen-1-ol | 72 |

Hierbei ist eine übliche Wärmerückgewinnung aus der Abluft der Darre wie folgt vorgesehen:

| Temperatur der Abluft | | |
|---|---|---|
| vor dem Wärmetauscher | | |
| beim Schwelken | $23° - 35°$ C | 12 h |
| beim Ausdarren | $35° - 77°$ C | $6 - 8$ h |
| nach dem Wärmetauscher | | |
| beim Schwelken | $20° - 28°$ C | 12 h |
| beim Ausdarren | $28° - 60°$ C | $6 - 8$ h |

Dem Waschwasser wird als Zusatz 0,8 Gew.-% eines Esters des Sorbitans mit Palmitinsäure zugegeben. Hierdurch ergibt sich ein Restgehalt von 5 Gew.-% der Gesamtemission geruchsaktiver organischer Substanzen in der gereinigten Abluft.

Beispiel 4

Fischmehl-, Fischtran- und Fischölherstellung

Die Abluft enthält unter anderem folgende geruchsaktive Substanzen:

$100 - 200$ mg/m³ Amine
$100 - 300$ mg/m³ $N_2$-haltige Verbindungen
$10 - 50$ mg/m³ Aldehyde

Die Schwaden werden nach Rückkühlung dem Gaswäscher mit einer Temperatur von $60°$ C zugeführt.
Das Waschwasser enthält einen Zusatz von 2 Gewichtsprozent einer Mischung aus

1 Gewichtsprozent (3-Acylaminopropyl)-dimethylglycin und
1 Gewichtsprozent eines mit Methylenoxid umgesetzten Palmitinsäure-Sorbitanesters.

Die auf diese Weise im Gaswäscher gereinigte Abluft besitzt noch einen Restgehalt von 10 Gew.-% geruchsaktiver Substanzen.

6

Beispiel 5

Kaffee-Rösterei

Die Abluft enthält unter anderem folgende geruchsaktive Bestandteile:

5 – 10 mg/m³ Aldehyde
ca. 1 mg/m³ Phenole
ca. 1 mg/m³ $N_2$- und S-haltige Komponenten (Heterocyklen)

Die Schwaden werden nach Rückkühlung dem Gaswäscher mit einer Temperatur von ca. 60° C zugeführt.

Das Waschwasser erhält einen Zusatz von 3 Gew.-% N-Alkyl-di-(aminoäthyl-)glycin.

Durch diese Gaswäsche werden die geruchsaktiven Substanzen bis auf einen Restgehalt von 12 Gew.-% beseitigt.

## Patentansprüche

1. Verfahren zur Beseitigung geruchsaktiver Substanzen aus der Abluft von Brauerei-Sudanlagen, Mälzerei-Anlagen, Kaffee-Röstereien, Fischverarbeitungs-Betrieben, Anlagen der Suppenwürze-Industrie, Betrieben zur Tierkörper-Beseitigung oder dergleichen, wobei die Abluft durch Eindüsen von mit einem Zusatz versehenen Waschwasser gereinigt wird, dadurch gekennzeichnet, daß als Zusatz

a)  nichtionogene Verbindungen, nämlich

   $a_1$)  partielle Ester von Polyalkoholen, wie Glyzerinmono- bzw. -distearate und -oleate, Sorbitmonostearat und -oleat oder
   
   $a_2$)  Äthylenoxid- bzw. Propylenoxid-Addukte mit Fettsäuren, Fettalkoholen, Fettaminen, partiellen Fettsäureestern mehrwertiger Alkohole, insbesondere des Glyzerins und des Sorbits, Wasser (Polyalkylenglykole) oder

b)  ampholytische Verbindungen, nämlich

   $b_1$)  langkettige substituierte Aminosäuren wie
   N-Alkyl-di-(aminoäthyl-)glycin,
   N-Alkyl-2-aminopropionat oder
   
   $b_2$)  Betaine, wie (3-Acylaminopropyl)-dimethylglycin, Alkyl-imidazolium-Betaine oder

c)  Mischungen von Verbindungen der Gruppen a) und b) verwendet werden, wobei
d)  zur Beseitigung unpolarer (lipophiler) geruchsaktiver Substanzen als Zusatz Verbindungen der Gruppe a) und zur Beseitigung polarer geruchsaktiver Substanzen als Zusatz Verbindungen der Gruppe b) oder eine Mischung von Verbindungen der Gruppen a) und b) verwendet werden.

2. Verfahren nach Anspruch 1, dadurch gekennzeichnet, daß der Zusatz dem Waschwasser in einer Menge von 0,1 – 3 Gewichtsprozent, vorzugsweise von 0,5 bis 1,2 Gewichtsprozent beigegeben wird.

3. Verfahren nach einem der Ansprüche 1 oder 2, dadurch gekennzeichnet, daß ein Gaswäscher Verwendung findet, der im unteren Bereich einen Anschluß zum Gaseintritt und einen Anschluß zum Waschwasseraustritt und im oberen Bereich einen Anschluß zum Gasaustritt sowie einen Sprühkopf zum Eindüsen des Waschwassers aufweist, wobei der untere Teil des Wäscher-Gehäuses zur Oberflächenvergrößerung dienende Füllkörper enthält, und daß die Menge des Waschwasser-Zusatzes so dosiert wird, daß der von Füllkörpern freie, gasdurchströmte Kopfraum des Wäscher-Gehäuses nicht vollständig mit Schaum gefüllt ist.

4. Verfahren nach einem der Ansprüche 1, 2 oder 3, dadurch gekennzeichnet, daß die Abluft mit einer Temperatur von weniger als 80° C der Waschstrecke zugeführt wird.

## Claims

1. A process for eliminating odour-emitting substances from the waste air of breweries, malting houses, coffee roasting installations, fish processing plants, soup-seasoning installations, factories for the disposal of animal carcasses or the like, the waste air being purified by spraying in washing water comprising an addition, characterised in that as addition

a) non-ionic compounds, namely

a$_1$) partial esters of polyalcohols, such as glycerol monostearates or distearates and oleates, sorbitol monostearate and oleate or

a$_2$) ethylene oxide or propylene oxide adducts with fatty acids, fatty alcohols, fatty amines, partial fatty acids of polyhydric alcohols, particularly of glycerol and sorbital, water (polyalkylene glycols) or

b) ampholytic compounds, namely

b$_1$) long-chain substituted amino acids, such as N-alkyl-di-(aminoethyl)-glycine, N-alkyl-2-amino-propionate or

b$_2$) betaines, such as (3-acylaminopropyl)-dimethylglycine, alkyl imidazolium betaines or

c) mixtures of compounds belonging to groups a) and b), are used,

d) for eliminating apolar (lipophilic) odour-emitting substances an addition of compounds belonging to group a) and for eliminating polar odour-emitting substances an addition of compounds belonging to group b) or of a mixture of compounds belonging to groups a) and b) being used.

2. A process as claimed in Claim 1, characterised in that the addition is made to the washing water in a quantity of from 0.1 to 3% by weight and preferably in a quantity of from 0.5 to 1.2% by weight.

3. A process as claimed in Claim 1 or 2, characterised in that a gas washer is used which comprises at its lower end a gas inlet connection and a washing water outlet connection and, at its upper end, a gas outlet connection and a sprinkler head for spraying in the washing water, the lower part of the washer housing containing a packing for surface enlargement, and in that the addition to the washing water is dosed in such a way that the packing-free head space of the washer housing through which the gases flow is not completely filled with foam.

4. A process as claimed in Claim 2 or 3, characterised in that the waste air is delivered to the washing zone at a temperature of less than 80°C.

## Revendications

1. Procédé d'élimination de substances odorantes de l'air d'évacuation d'installations de brassage de brasseries, de malteries, d'établissements de torréfaction de café, d'entreprises de traitement de poissons, d'installations de l'industrie de préparation de condiments pour potage, d'entreprises d'élimination de corps d'animaux ou analogues, l'air d'évacuation étant épuré par projection d'eau de lavage pulvérisée contenant un additif, procédé caractérisé en ce que l'additif utilisé consiste:

a) en composés non ioniques, à savoir:

a$_1$) en esters partiels de polyols tels que des mono ou bistéarate et mono ou bioléate de glycérine, en monostéarate ou monooléate de sorbitol, ou

a$_2$) en produits d'addition d'oxyde d'éthylène ou de propylène et d'acides gras, d'alcools gras, d'amines grasses, d'esters partiels d'acides gras, d'alcools à plusieurs valences, en particulier de la glycérine et du sorbitol, de l'eau (polyalkylèneglycols) ou

b) en composés ampholytiques, à savoir:

b$_1$) en aminoacides substitués à chaîne longue tels que la N-alkyl-di(aminoéthyl-)glycine, le N-alkyl-2-aminopropionate ou

b$_2$) en bétaïne telle que la (3-acylaminopropyl)-diméthylglycine, l'alkyl-imidazoline-bétaïne ou

c) en mélanges des composés des groupes a) et b),

d) l'additif utilisé pour l'élimination de substances odorantes homopolaires (lipophiles) consiste en composés du groupe a) et l'additif utilisé pour l'élimination de substances odorantes polaires consiste en des composés du groupe b) ou en un mélange de composés des groupes a) et b).

2. Procédé selon la revendication 1, caractérisé en ce que l'additif est ajouté à l'eau de lavage en quantité de 0,1 à 3% en poids, de préférence de 0,5 à 1,2% en poids.

3. Procédé selon l'une des revendications 1 et 2, caractérisé en ce qu'il consiste à utiliser un laveur de gaz qui comporte au bas un raccord d'entrée du gaz et un raccord de sortie de l'eau de lavage et, dans le haut, un raccord de sortie du gaz ainsi qu'une tête de pulvérisation destinée à projeter l'eau de lavage, la partie inférieure de l'enveloppe du laveur contenant des corps de remplissage destinés à augmenter la surface et la quantité de l'additif à l'eau de lavage est dosée de manière que le volume de tête de l'enveloppe du laveur, qui ne contient pas de corps de remplissage et qui est balayé par les gaz, ne soit pas entièrement rempli de mousse.

4. Procédé selon l'une des revendications 1, 2 et 3, caractérisé en ce que l'air d'évacuation est dirigé sur le parcours de lavage à une température inférieure à 80°C.

9